# EUROPEAN PATENT SPECIFICATION

(11) **EP 0 778 805 B1**
(45) Date of publication and mention of the grant of the patent: **14.10.1998**
(21) Application number: 95930595.4
(22) Date of filing: 31.08.1995
(51) Int. Cl.: B60N 2/16

(54) **SEAT HEIGHT ADJUSTMENT MECHANISM FOR A VEHICLE SEAT**
HÖHENVERSTELLVORRICHTUNG FÜR EINEN FAHRZEUGSITZ
MECANISME DE REGLAGE DE LA HAUTEUR D'UN SIEGE DE VEHICULE

(30) Priority: 02.09.1994 GB 9417701
(43) Date of publication of application: 18.06.1997
(73) Proprietor: Dunlop Cox Limited, Nottingham NG8 4GP (GB)
(72) Inventor: CHRISTOPHER, Hugh, Charles, West Bridgford Nottingham NG2 6JR (GB)
(74) Representative: Archer, Philip Bruce
(86) International application number: GB9502049
(87) International publication number: WO9607561

(56) References cited:
- DE-A- 3 421 274
- DE-A- 4 302 329
- DE-U- 8 521 870
- GB-A- 518 062

## Description

This invention relates to a seat height adjustment mechanism.

An existing seat height adjustment mechanism requires a fixed rear brace tube and a separate rear height adjustment operating tube. In the construction of the present invention the fixed rear brace tube is unnecessary.

DE-A-4302329 discloses a seat height adjustment mechanism comprising a tube provided with and capable of rotating about an anchorage of the seat.

In accordance with the present invention a seat height adjustment mechanism comprises a tube provided with and capable of rotating about a seat belt anchorage of the seat to adjust the seat height.

Preferably the mechanism comprises a support arm which is capable of rotating with the tube, the support arm being associated with a bracket on which the seat cushion pan is supported.

Preferably also the mechanism comprises a linkage attached to an operating device, operation of the device causing rotation of the tube via the linkage. The linkage may comprise a link arm capable of pivoting with the tube and a link pivotally connected between the link arm and the operating device.

In accordance with another aspect of the invention a vehicle seat frame incorporates a seat height adjustment mechanism as described above, this frame having two seat slides, one at each side of the frame, and the tube extends transversely between the two slides, one end of the tube being provided with the seat belt anchorage located on one of the slides. Preferably the end of the tube provided with the seat belt anchorage is supported in a bearing on the said one slide.

One embodiment of the invention will now be described by way of example only with reference to the accompanying drawings of which
Figure 1 shows a partial side view of the rear part of the frame;
Figure 2 shows in detail the seat belt anchorage; and
Figure 3 shows a plan view of a vehicle seat frame.

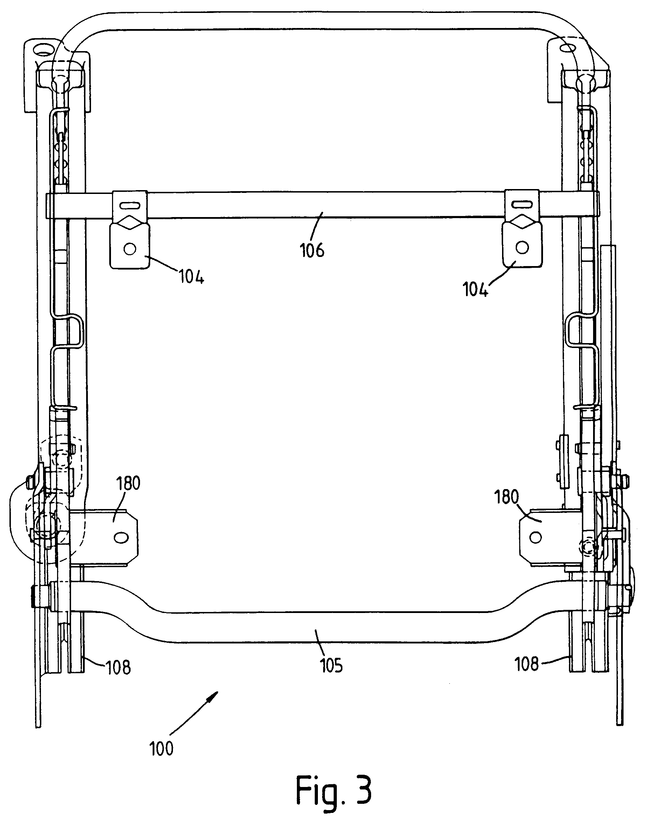

As shown in Figure 3 a seat frame 100 comprises two seat slides 108 and two cross tubes 105, 106 extending between the upper moveable members of the slides 108. Both tubes brace the frame. One tube 106 is straight and is positioned near the front of the frame 100. The other tube 105 is cranked as shown and is positioned near the rear of the frame 100. The front tube 106 carries two brackets 104 on which the cushion pan of the seat is supported. Two rear brackets 180, both adjacent the rear tube, support the rear part of the seat cushion pan.

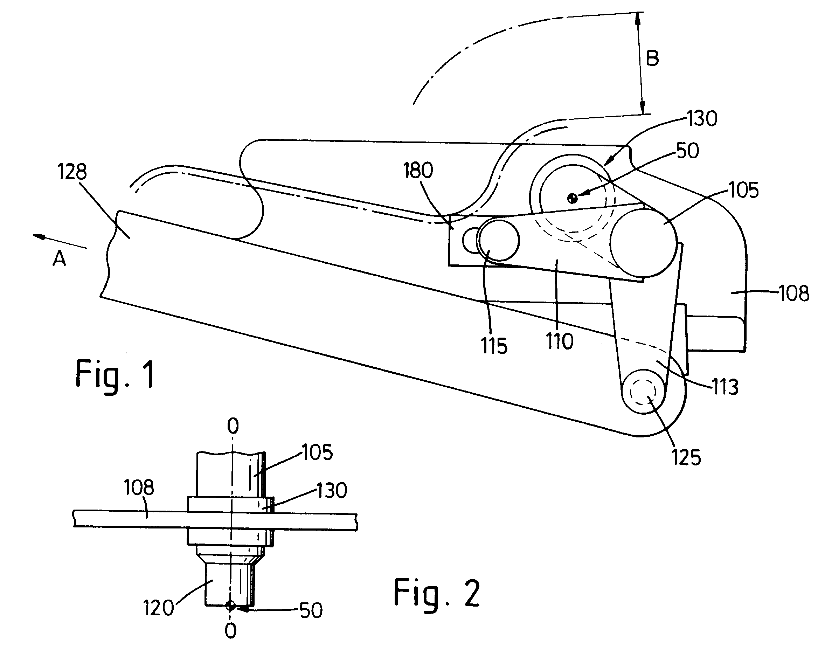

Both ends of the rear cross tube 105 pass through and are connected to the upper members of the slides 108. On the outer side of the inboard slide the end of the rear tube is formed with a seat belt anchorage boss (see Figure 2).

As shown in more detail in Figures 1 and 2 the end of the tube passes through a bearing 130 provided in the upper member of the inboard seat slide 108. The tube 105 is thus able to rotate about the axis 0-0. The outer end of the tube is provided with a seat belt anchorage boss 120 centred on the seat belt anchorage point 50.

The seat height adjustment mechanism comprises a support arm 110 and a link arm 113 both welded to the rear cross tube 105. In the lowest position of the seat, as shown in Figure 2, the link arm 113 extends substantially vertically downwards, and the support arm 110 extends substantially horizontally forwards. At the forward end of the support arm 110 is a pivotal attachment 115 to the associated bracket 180 for the seat cushion pan. At the lower end of the link arm 113 is a pivotal attachment 125 to a forwardly extending link 128, which connects to an operating mechanism (not shown) positioned at the front of the seat. The operating mechanism may for example comprise a rotatable handle connected to a rack and pinion, whereby rotation of the handle moves the link forwards (as shown by arrow A) or backwards, depending on the direction of rotation.

In operation if the link 128 is moved forwards the support arm and the link arm and the rear cross tube 108 rotate about the axis 0-0. The bracket 180 and the rear part of the seat cushion supported thereon is then raised to the required height to suit the seat occupant. The maximum movement is shown at B.

A similar horizontal arm is positioned adjacent to the other seat slide and is attached to the other bracket 180 so that forward movement of the link and rotation of tube causes simultaneous movement of this other bracket.

In a modification, the other end of the tube 105 is provided with another seat belt anchorage on the other seat slide.

## Claims

1. A seat height adjustment mechanism characterised by comprising a tube (105) provided with and capable of rotating about a seat belt anchorage (120) of the seat to adjust the seat height.

2. A seat height adjustment mechanism according to Claim 1 characterised by comprising a support arm (110) which is capable of rotating with the tube (105), the support arm (110) being associated with a bracket (180) on which the seat cushion pan is supported.

3. A seat height adjustment mechanism according to Claim 1 or Claim 2 characterised by comprising a linkage (113, 128) attached to an operating device, operation of the device causing rotation of the tube (105) via the linkage (113, 128).

4. A seat height adjustment mechanism according to Claim 3 characterised in that the linkage comprises a link arm (113) capable of rotating with the tube (105) and a link (128) pivotally connected between the link arm (113) and the operating device.

5. A vehicle seat frame (100) incorporating a seat height adjustment mechanism according to any one of the preceding claims characterised in that the frame (100) has two seat slides (108) one at each side of the frame (100), and the tube (105) extends transversely between the two slides (108), one end of the tube being provided with the seat belt anchorage (120) located on one of the slides.

6. A vehicle seat frame according to Claim 5 characterised in that the end of the tube (105) provided with the seat belt anchorage (120) is supported in a bearing (130) on the said one slide (108).

7. A vehicle seat frame according to Claim 5 or Claim 6 characterised in that the tube (105) provides a bracing for the frame (100).

## Patentansprüche

1. Höhenverstellvorrichtung für Sitze, **gekennzeichnet,** durch ein an der Sicherheitsgurtverankerung (120) des Sitzes vorgesehenes und um diese drehbares Rohr (105) zum Verstellen der Sitzhöhe.

2. Höhenverstellvorrichtung für Sitze nach Anspruch 1, **gekennzeichnet** durch einen mit dem Rohr (105) drehbaren Stützarm (110), welcher mit einem Träger (180), an der der Sitzpolstersockel gehalten wird, verbunden ist.

3. Höhenverstellvorrichtung für Sitze nach Anspruch 1 oder 2, **gekennzeichnet** durch eine an einer Bedienungsvorrichtung befestigtes Gelenk (113, 128), wobei die Bedienung der Vorrichtung das Drehen des Rohrs (105) über das Gelenk (113, 128) bewirkt.

4. Höhenverstellvorrichtung für Sitze nach Anspruch 3, dadurch **gekennzeichnet,** daß das Gelenk einen mit dem Rohr (105) drehbaren Gelenkarm (113) und ein schwenkbar zwischen dem Gelenkarm (113) und der Bedienungsvorrichtung verbundenes Gelenkglied (128) enthält.

5. Fahrzeugsitzrahmen (100) mit eingebauter Höhenverstellvorrichtung für Sitze nach einem der vorhergehenden Ansprüche, dadurch **gekennzeichnet,** daß der Rahmen (100) zwei Sitzschienen (108) auf jeder Seite des Rahmens (100) hat, und das Rohr (105) quer zwischen den zwei Schienen (108) verläuft, wobei ein Ende des Rohrs mit der auf einer der Schienen befindlichen Sicherheitsgurtverankerung (120) versehen ist.

6. Fahrzeugsitzrahmen nach Anspruch 5, dadurch **gekennzeichnet,** daß das mit der Sicherheitsgurtverankerung (120) versehene Ende des Rohrs (105) in einem Lager (130) auf der einen Schiene (108) gehalten ist.

7. Fahrzeugsitzrahmen nach Anspruch 5 oder 6, dadurch **gekennzeichnet,** daß das Rohr (105) eine Verstrebung für den Rahmen (100) bildet.

## Revendications

1. Mécanisme de réglage de hauteur de siège, caractérisé en ce qu'il comprend un tube (105) pourvu d'un ancrage de ceinture de sécurité (120) du siège et pouvant tourner autour de cet ancrage, afin de régler la hauteur de siège.

2. Mécanisme de réglage de hauteur de siège suivant la revendication 1, caractérisé en ce qu'il comprend un bras de support (110) qui peut tourner avec le tube (105), le bras de support (110) étant associé à une ferrure (180) sur laquelle la cuvette de coussin de siège est soutenue.

3. Mécanisme de réglage de hauteur de siège suivant la revendication 1 ou la revendication 2, caractérisé en ce qu'il comprend des moyens de liaison (113, 128) solidaires d'un dispositif d'actionnement, un actionnement du dispositif provoquant une rotation du tube (105) par l'intermédiaire des moyens de liaison (113, 128).

4. Mécanisme de réglage de hauteur de siège suivant la revendication 3, caractérisé en ce que les moyens de liaison comprennent un bras (113) pouvant tourner avec le tube (105) et une barre (128) montée de manière articulée entre le bras (113) et le dispositif d'actionnement.

5. Châssis de siège de véhicule (100) comportant un mécanisme de réglage de hauteur de siège suivant l'une quelconque des revendications précédentes, caractérisé en ce que le châssis (100) comprend deux glissières de siège (100), situées une de chaque côté du châssis et le tube (105) s'étend transversalement entre les deux glissières (108), une extrémité du tube étant pourvue de l'ancrage de ceinture de sécurité (120) situé sur l'une, particulière, des glissières.

6. Châssis de siège de véhicule suivant la revendication 5, caractérisé en ce que l'extrémité du tube (105) pourvue de l'ancrage de ceinture de sécurité (120) est portée dans un palier (130) situé sur ladite glissière particulière (108).

7. Châssis de siège de véhicule suivant la revendication 5 ou la revendication 6, caractérisé en ce que le tube (105) assure un entretoisement pour le châssis (100).
